# EUROPÄISCHE PATENTANMELDUNG

(11) **EP 3 229 090 A1**
(43) Veröffentlichungstag der Anmeldung: **11.10.2017**
(21) Anmeldenummer: 16163673.3
(22) Anmeldetag: 04.04.2016
(51) Int. Cl.: G05B 19/4097

(54) **MITTELS EINES COMPUTERSYSTEMS DURCHGEFÜHRTES VERFAHREN ZUR PROJEKTIERUNG EINES FERTIGUNGSPROZESSES SOWIE COMPUTERPROGRAMM UND COMPUTERSYSTEM ZUR DURCHFÜHRUNG DES VERFAHRENS**

(71) Anmelder: FELSS Systems GmbH, 75203 Königsbach-Stein (DE)
(72) Erfinder: Heinrichs, Serjosha, D-75177 Pforzheim (DE); Luther, Torben, D-79108 Freiburg (DE); Marré, Michael, D-76189 Karlsruhe (DE); Martin, Stefan, D-87484 Nesselwang (DE); Nöth, Thomas, D-75203 Königsbach Stein (DE); Preisinger, Markus, D-87616 Marktoberdorf (DE)
(74) Vertreter: Kohler Schmid Möbus Patentanwälte

(57) **Zusammenfassung**

Mittels eines Computersystems durchgeführtes Verfahren zur Projektierung eines Fertigungsprozesses sowie Computerprogramm und Computersystem zur Durchführung des Verfahrens

Mittels eines Computersystems wird ein Verfahren durchgeführt zur Projektierung eines Fertigungsprozesses zur Fertigung eines Werkstücks (1) mit einer Soll-Ausprägung eines Beschaffenheitsmerkmals des Werkstücks (1). Im Rahmen des Verfahrens
• wird die Soll-Ausprägung des Beschaffenheitsmerkmals des zu fertigenden Werkstücks (1) erfasst,
• wird die erfasste Soll-Ausprägung des Beschaffenheitsmerkmals mit Ausprägungen des Beschaffenheitsmerkmals von Vorläufer-Werkstücken verglichen, wobei die Ausprägungen des Beschaffenheitsmerkmals der Vorläufer-Werkstücke in einer Ausprägungsdatenbank des Computersystems hinterlegt sind und wobei den in der Ausprägungsdatenbank hinterlegten Ausprägungen des Beschaffenheitsmerkmals der Vorläufer-Werkstücke jeweils ein in einer Parameterdatenbank des Computersystems hinterlegter und zur Realisierung der betreffenden Ausprägungen des Beschaffenheitsmerkmals eines Vorläufer-Werkstücks geeignet definierter Fertigungsparameter zugeordnet ist,
• wird bei der Feststellung einer für die Soll-Ausprägung des Beschaffenheitsmerkmals relevanten Ausprägung des Beschaffenheitsmerkmals eines Vorläufer-Werkstücks anhand der Definition des Fertigungsparameters, welcher der relevanten Ausprägung des Beschaffenheitsmerkmals des Vorläufer-Werkstücks zugeordnet ist, dieser Fertigungsparameter für den Fertigungsprozess zur Fertigung des Werkstücks (1) mit der Soll-Ausprägung des Beschaffenheitsmerkmals definiert.

Ein Computerprogramm umfasst Programmcodemittel zur rechnergestützten Durchführung des vorstehenden Verfahrens. Ein Computersystem ist zur Durchführung des Verfahrens ausgebildet.

## Beschreibung

Die Erfindung betrifft ein mittels eines Computersystems durchgeführtes Verfahren zur Projektierung eines Fertigungsprozesses, im Rahmen dessen ein Werkstück aufgrund eines geeignet definierten Fertigungsparameters mit einer Soll-Ausprägung eines Beschaffenheitsmerkmals des Werkstücks gefertigt wird.

Die Erfindung betrifft des Weiteren ein Computerprogramm zur rechnergestützten Durchführung des vorstehenden Verfahrens, ein computerlesbares Speichermedium mit einem derartigen Computerprogramm sowie ein zur Durchführung des vorstehenden Verfahrens ausgebildetes Computersystem.

Ein Fertigungsprozess zur Erzeugung eines hinsichtlich seiner Beschaffenheit vorab spezifizierten Werkstücks bedarf einer umfassenden Vorbereitung. Im Rahmen der Projektierung des Fertigungsprozesses sind insbesondere die einschlägigen Fertigungsparameter derart zu definieren, dass sich als Ergebnis des Fertigungsprozesses ein Werkstück mit der gewünschten Beschaffenheit ergibt.

Die Aufgabe der vorliegenden Erfindung besteht darin, die gängigen Verfahren zur Projektierung eines Fertigungsprozesses zur Erzeugung eines Werkstücks mit vorgegebener Beschaffenheit zu optimieren.

Erfindungsgemäß gelöst wird diese Aufgabe durch das Verfahren gemäß Patentanspruch 1, das Computerprogramm gemäß Patentanspruch 12, das computerlesbare Speichermedium gemäß Patentanspruch 13 und das Computersystem gemäß Patentanspruch 14.

Das erfindungsgemäße Verfahren umfasst die folgenden rechnergestützt durchgeführten Verfahrensschritte:
- die Soll-Ausprägung des Beschaffenheitsmerkmals des zu fertigenden Werkstücks wird erfasst,
- die erfasste Soll-Ausprägung des Beschaffenheitsmerkmals wird mit Ausprägungen des Beschaffenheitsmerkmals von Vorläufer-Werkstücken verglichen, wobei die Vorläufer-Werkstücke im Rahmen früherer Fertigungsprozesse mit der jeweiligen Ausprägung des Beschaffenheitsmerkmals gefertigt worden sind und die Ausprägungen des Beschaffenheitsmerkmals der Vorläufer-Werkstücke in einer Ausprägungsdatenbank des Computersystems hinterlegt sind und wobei den in der Ausprägungsdatenbank hinterlegten Ausprägungen des Beschaffenheitsmerkmals der Vorläufer-Werkstücke jeweils ein in einer Parameterdatenbank des Computersystems hinterlegter und zur Realisierung der betreffenden Ausprägung des Beschaffenheitsmerkmals eines Vorläufer-Werkstücks geeignet definierter Fertigungsparameter zugeordnet ist,
- bei der Feststellung einer für die Soll-Ausprägung des Beschaffenheitsmerkmals relevanten Ausprägung des Beschaffenheitsmerkmals eines Vorläufer-Werkstücks, welche mit der Soll-Ausprägung des Beschaffenheitsmerkmals identisch ist oder aus welcher die Soll-Ausprägung des Beschaffenheitsmerkmals ableitbar ist, wird anhand der Definition des Fertigungsparameters, welcher der relevanten Ausprägung des Beschaffenheitsmerkmals des Vorläufer-Werkstücks zugeordnet ist, dieser Fertigungsparameter für den Fertigungsprozess zur Fertigung des Werkstücks mit der Soll-Ausprägung des Beschaffenheitsmerkmals definiert.

Die Soll-Ausprägung eines Beschaffenheitsmerkmals des zu fertigenden Werkstücks kann auf unterschiedliche Art und Weise vermittelt werden. Denkbar ist beispielsweise die Erfassung der gewünschten Ausprägung eines Beschaffenheitsmerkmals des zu fertigenden Werkstücks anhand einer schriftlichen Spezifikation, unmittelbar anhand eines Musterteils des zu fertigenden Werkstücks oder anhand einer Werkstückzeichnung. Die Erfassung kann insbesondere durch manuelle Eingabe und/oder unter Anwendung gängiger bildverarbeitender und/oder bilderzeugender Verfahren erfolgen, wie sie der Art nach von CAD-Anwendungen bekannt sind. Zur Erfassung der Soll-Ausprägung eines Beschaffenheitsmerkmals des zu fertigenden Werkstücks weist das erfindungsgemäße Computersystem eine Erfassungseinheit auf. Die Erfassungseinheit kann derart ausgebildet sein, dass sich beispielsweise eine Bauteilkontur über eine Eingabemaske und unter Rückgriff auf vorgefertigte Zeichnungen manuell eingeben lässt.

Ist die Soll-Ausprägung des in Rede stehenden Beschaffenheitsmerkmals des zu fertigenden Werkstücks erfasst, so wird erfindungsgemäß zur Projektierung des späteren Fertigungsprozesses auf Erfahrungen aus ähnlich gelagerten Fällen in der Vergangenheit zurückgegriffen. Durch Vergleichen der Soll-Ausprägung des Beschaffenheitsmerkmals mit in einer Ausprägungsdatenbank hinterlegten Ausprägungen desselben Beschaffenheitsmerkmals an Vorläufer-Werkstücken wird geprüft, ob im Rahmen früherer Fertigungsprozesse das betreffende Beschaffenheitsmerkmal bereits mit einer Ausprägung realisiert worden ist, die mit der Soll-Ausprägung übereinstimmt oder der Soll-Ausprägung zumindest nahekommt. Der Vergleich der Soll-Ausprägung des Beschaffenheitsmerkmals mit in einer Datenbank hinterlegten Ausprägungen desselben Beschaffenheitsmerkmals an Vorläufer-Werkstücken wird durch eine Vergleichseinheit des erfindungsgemäßen Computersystems durchgeführt. Eine Recheneinheit des Computersystems greift dabei auf einen Datenspeicher des Computersystems zu, welcher die Ausprägungsdatenbank enthält.

Den in der Ausprägungsdatenbank hinterlegten Ausprägungen des in Rede stehenden Beschaffenheitsmerkmals von Vorläufer-Werkstücken sind in einer Parameterdatenbank hinterlegte Fertigungsparameter einschließlich einer Definition der Fertigungsparameter zugeordnet, aufgrund derer sich in dem betreffenden früheren Fertigungsprozess die zugeordnete Ausprägung des Beschaffenheitsmerkmals ergeben hat. Die Parameterdatenbank ist in einem weiteren Datenspeicher des erfindungsgemäßen Computersystems enthalten. Sowohl die Parameterdatenbank als auch die Ausprägungsdatenbank können fortlaufend aktualisiert werden.

Als Fertigungsparameter in Frage kommen beispielsweise die im Rahmen des früheren Fertigungsprozesses eingesetzten Fertigungsvorrichtungen wie etwa Fertigungsmaschinen oder Werkzeuge, aber auch die Prozessparameter des früheren Fertigungsprozesses wie beispielsweise der Betrag von Umformkräften, die auf ein umzuformendes Werkstück ausgeübt worden sind.

Wird bei dem mittels der numerischen Vergleichseinheit durchgeführten Vergleich der Soll-Ausprägung des in Rede stehenden Beschaffenheitsmerkmals mit dessen Ausprägung im Falle früherer Fertigungsprozesse eine frühere Ausprägung festgestellt, die relevant ist und die dementsprechend mit der Soll-Ausprägung übereinstimmt oder zumindest als Grundlage für die Realisierung der Soll-Ausprägung dienen kann, so wird anhand der Definition des Fertigungsparameters, welcher der relevanten früheren Ausprägung des Beschaffenheitsmerkmals zugeordnet ist, derselbe Fertigungsparameter zur Realisierung der Soll-Ausprägung des Beschaffenheitsmerkmals definiert. Ist die frühere Ausprägung mit der Soll-Ausprägung des Beschaffenheitsmerkmals identisch, so kann der Fertigungsparameter mit derjenigen Definition, welche die frühere Ausprägung des Beschaffenheitsmerkmals bewirkt hat, unverändert für den künftigen Fertigungsprozess übernommen werden. Im Falle von Abweichungen zwischen der Soll-Ausprägung und der früheren Ausprägung des in Rede stehenden Beschaffenheitsmerkmals wird aus der früheren Definition des Fertigungsparameters dessen Definition für den künftigen Fertigungsprozess abgeleitet. Soll beispielsweise als Beschaffenheitsmerkmal eine zylindrische Form mit einem als Soll-Ausprägung vorgesehenen Innendurchmesser von 30 mm realisiert werden, ist aus früheren Fertigungsprozessen aber nur eine zylindrische Form mit einem von 30 mm verschiedenen Innendurchmesser bekannt und wurde dieser mit einem entsprechend bemessenen (definierten) Werkzeugdurchmesser eines Umformwerkzeugs (Fertigungsparameter) erzeugt, so ergibt sich die Soll-Ausprägung (Innendurchmesser 30 mm) des Beschaffenheitsmerkmals "zylindrische Form" durch entsprechende Anpassung der früheren Definition des Fertigungsparameters "Werkzeugdurchmesser des Umformwerkzeugs". Zur Definition des betreffenden Fertigungsparameters für den künftigen Fertigungsprozess dient eine dafür ausgelegte numerische Auswerteeinheit des erfindungsgemäßen Computersystems.

Die vorstehenden Verfahrensschritte können auf dem erfindungsgemäßen Computersystem durch Abarbeiten des erfindungsgemäßen Computerprogramms durchgeführt werden. Das erfindungsgemäße Computerprogramm kann auf dem erfindungsgemäßen computerlesbaren Speichermedium gespeichert sein.

Besondere Ausführungsarten der Erfindung gemäß den unabhängigen Patentansprüchen ergeben sich aus den abhängigen Patentansprüchen 2 bis 11.

Die Patentansprüche 2 bis 5 betreffen den Fall, dass bei dem Vergleich der Soll-Ausprägung eines Beschaffenheitsmerkmals des zu fertigenden Werkstücks mit Ausprägungen desselben Beschaffenheitsmerkmals an Vorläufer-Werkstücken mehrere in der Ausprägungsdatenbank hinterlegte Ausprägungen als relevant erkannt werden. Aus der Mehrzahl der relevanten früheren Ausprägungen wird die optimale Ausprägung als Grundlage für die Definition des zugeordneten Fertigungsparameters des künftigen Fertigungsprozesses ausgewählt. Welche der relevanten früheren Ausprägungen optimal und folglich zu bevorzugen ist, wird anhand eines oder mehrerer Auswahlkriterien festgelegt. Als Auswahlkriterien werden dabei im Rahmen des erfindungsgemäßen Verfahrens insbesondere herangezogen:
- der Grad einer Ähnlichkeit zwischen der relevanten Ausprägung des Beschaffenheitsmerkmals und der Soll-Ausprägung des Beschaffenheitsmerkmals und/oder
- ein mit der relevanten Ausprägung des Beschaffenheitsmerkmals verbundener Verschleiß an einem Werkzeug, mittels dessen das Vorläufer-Werkstück mit der relevanten Ausprägung gefertigt worden ist und/oder
- der Betrag einer mit der relevanten Ausprägung des Beschaffenheitsmerkmals verbundenen Bearbeitungskraft, welche bei der Fertigung des Vorläufer-Werkstücks zur Erzeugung der relevanten Ausprägung des Beschaffenheitsmerkmals aufgebracht worden ist und/oder
- eine mit der relevanten Ausprägung des Beschaffenheitsmerkmals verbundene Prozessdauer zur Fertigung des Vorläufer-Werkstücks mit der relevanten Ausprägung des Beschaffenheitsmerkmals und/oder
- ein mit der relevanten Ausprägung des Beschaffenheitsmerkmals verbundener Bedarf an Fertigungseinrichtungen zur Fertigung des Vorläufer-Werkstücks mit der relevanten Ausprägung des Beschaffenheitsmerkmals und/oder
- ein Werkstoff, aus welchem das Vorläufer-Werkstück mit der relevanten Ausprägung des Beschaffenheitsmerkmals gefertigt worden ist.

Beispielsweise in Abhängigkeit von dem konkreten Anwendungsfall können bei der Auswahl einer der relevanten früheren Ausprägungen als bevorzugte relevante Ausprägung mehrere Auswahlkriterien gleichzeitig von Bedeutung sein. In derartigen Fällen ist erfindungsgemäß eine unterschiedliche Gewichtung der herangezogenen Auswahlkriterien denkbar.

Die Beschaffenheitsmerkmale eines Werkstücks, deren Soll-Ausprägung durch den zu projektierenden Fertigungsprozess realisierbar sein muss, sind vielfältig. Denkbar sind beispielsweise mechanische, thermische und/oder tribologische Eigenschaften des zu fertigenden Werkstücks. Ein besonders praxisrelevantes Beschaffenheitsmerkmal von zu fertigenden Werkstücken ist die Werkstückgeometrie. Die Projektierung eines Fertigungsprozesses, der zu einer Soll-Ausprägung der Werkstückgeometrie des künftig zu fertigenden Werkstücks führt, ist Gegenstand der Patentansprüche 6 bis 10.

Insbesondere komplexere Werkstückgeometrien werden in bevorzugter Ausgestaltung des erfindungsgemäßen Verfahrens zunächst in Werkstückteilgeometrien zerlegt. Diese Zerlegung kann allgemein gültigen Regeln folgen oder einzelfallbezogen vorgenommen werden.

Handelt es sich bei dem zu projektierenden Fertigungsprozess beispielsweise um einen Umformprozess und kann im Rahmen dieses Umformprozesses aufgrund von fest vorgegebenen Rahmenbedingungen, etwa aufgrund der prinzipiell zur Verfügung stehenden Umformwerkzeuge oder aufgrund der Natur des Umformprozesses, eine bestimmte geometrische Form nur in Kombination mit einer weiteren bestimmten geometrischen Form erzeugt werden, so ist eine für die Projektierung derartiger Fertigungsprozesse allgemein gültige und folglich von dem konkreten Einzelfall unabhängige Regel für die Zerlegung der Werkstückgeometrie in Werkstückteilgeometrien unerlässlich, aufgrund derer als Werkstückteilgeometrie keine Werkstückteilgeometrie erzeugt wird, die nur eine der beiden zwingend miteinander kombinierten geometrischen Formen umfasst. Eine einzelfallbezogene Vorgabe für die "intelligente" Zerlegung der Werkstückgeometrie eines künftig zu fertigenden Werkstücks in Werkstückteilgeometrien kann beispielsweise die Häufigkeit berücksichtigen, mit der im Rahmen von Fertigungsprozessen der betroffenen Art geometrische Formen in Kombination miteinander erzeugt werden. Ist diese Häufigkeit hoch, so ist damit zu rechnen, dass sich die betreffende Kombination an einer Vielzahl von Vorläufer-Werkstücken findet. Erscheint die Kombination an einem künftig zu fertigenden Werkstück, so ist in diesem konkreten Fall eine Zerlegung der Werkstückgeometrie des künftig zu fertigenden Werkstücks empfehlenswert, die dazu führt, dass eine die häufige Kombination von geometrischen Formen umfassende Werkstückteilgeometrie erzeugt wird.

Nach der Zerlegung der Werkstückgeometrie in Werkstückteilgeometrien wird in der vorstehend beschriebenen Weise eine oder mehrere, insbesondere sämtliche Werkstückteilgeometrien daraufhin geprüft, ob die Soll-Ausprägung der Werkstückteilgeometrie bereits an Vorläufer-Werkstücken in identischer oder in ähnlicher Form realisiert war. Ist dies der Fall und findet sich dementsprechend eine oder mehrere relevante Ausprägungen der Werkstückteilgeometrie an Vorläufer-Werkstücken, so wird anhand der Definition des oder der Fertigungsparameter, welche die relevante(n) Ausprägung(en) der Werkstückteilgeometrie in der Vergangenheit bewirkt haben, der oder die betreffenden Fertigungsparameter des zu projektierenden Fertigungsprozesses definiert. Anschließend wird anhand der dann definierten Fertigungsparameter zur Erzeugung der Werkstückteilgeometrien mit Soll-Ausprägung des betreffenden Beschaffenheitsmerkmals der Fertigungsprozess zur Erzeugung der Werkstück(gesamt)geometrie mit Soll-Ausprägung des betreffenden Beschaffenheitsmerkmals entwickelt.

In vorteilhafter Weiterbildung des erfindungsgemäßen Verfahrens wird in entsprechender Weise für den künftigen Fertigungsprozess der oder die Fertigungsparameter definiert, welche eine Soll-Ausprägung eines zwischen zwei einander benachbarten Werkstückteilgeometrien vorgesehenen Übergangs bewirken. Besteht der geometrische Soll-Zusammenhang zwischen zwei einander benachbarten Werkstückteilgeometrien beispielsweise in einer Durchmesservergrößerung um einen bestimmten Betrag, so wird im Rahmen des erfindungsgemäßen Verfahrens geprüft, ob und gegebenenfalls in welcher Weise ein für den geometrischen Soll-Zusammenhang relevanter geometrischer Zusammenhang an Vorläufer-Werkstücken realisiert ist. Die Definition des oder der einschlägigen Fertigungsparameter im Rahmen der zur Fertigung der Vorläufer-Werkstücke ausgeführten Fertigungsprozesse dient gegebenenfalls als Grundlage für die Definition des oder derselben Fertigungsparameter des zu projektierenden Fertigungsprozesses.

Auch unter mehreren relevanten Ausprägungen der Werkstückteilgeometrie von Vorläufer-Werkstücken kann erfindungsgemäß anhand eines oder mehrerer Auswahlkriterien eine Auswahl getroffen und dadurch eine bevorzugte relevante Ausprägung bestimmt werden. Werden mehrere Auswahlkriterien herangezogen, so besteht die Möglichkeit, diese unterschiedlich zu gewichten. Beispiele für praxisrelevante Auswahlkriterien sind vorstehend angegeben.

Das oder die Auswahlkriterien, die für die Auswahl einer bevorzugten relevanten Ausprägung aus einer Mehrzahl von relevanten Ausprägungen der Werkstückteilgeometrie maßgebend sind, können erfindungsgemäß von Werkstückteilgeometrie zu Werkstückteilgeometrie variieren aber auch miteinander übereinstimmen.

Als Vorläufer-Werkstücke, auf deren Beschaffenheitsmerkmale und deren Ausprägung erfindungsgemäß zur Definition von Fertigungsparametern des zu projektierenden Fertigungsprozesses zurückgegriffen wird, kommen sowohl Fertigteile als auch Zwischenprodukte in Frage, die bei der Fertigung von Vorläufer-Werkstücken auf dem Weg zum Fertigteil erzeugt worden sind.

Nachfolgend wird die Erfindung anhand beispielhafter schematischer Darstellungen näher erläutert.

Es zeigen:
- Figur 1: ein Werkstück, für dessen Fertigung ein Fertigungsprozess zu projektieren ist,
- Figur 2: das Werkstück gemäß Figur 1 mit angedeuteter Zerlegung in Werkstückteilgeometrien und
- Figur 3: eine stark schematisierte Darstellung eines Computersystems zur Projektierung des Fertigungsprozesses zur Fertigung des Werkstücks gemäß den Figuren 1 und 2.

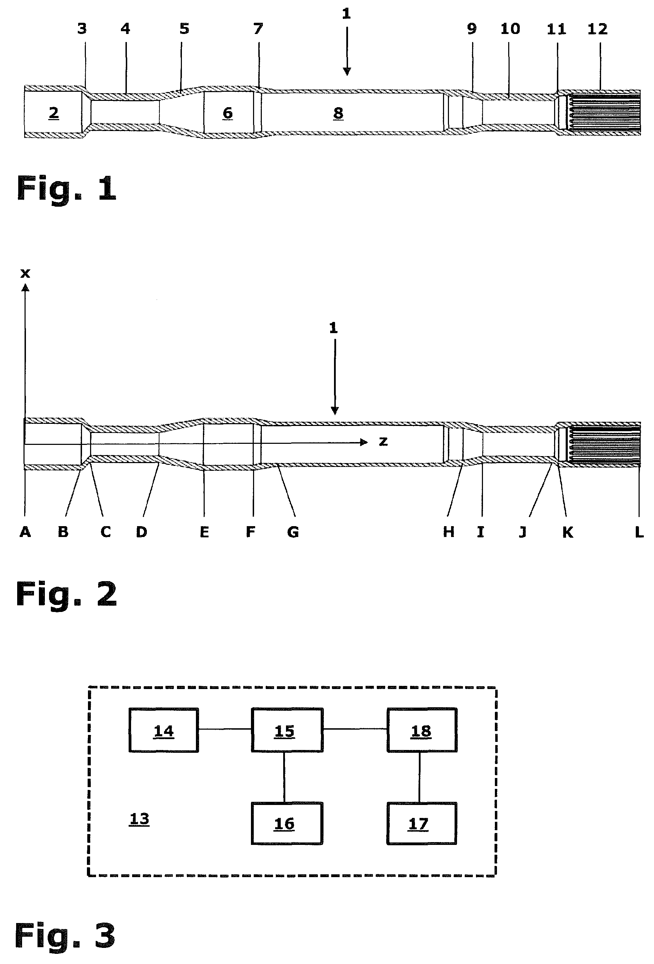

Es ist ein Fertigungsprozess zu projektieren zur Fertigung eines Werkstücks, in dem vorliegenden Beispielsfall zur Fertigung einer rotationssymmetrischen Hohlwelle 1. Bei dem Fertigungsprozess soll es sich der Art nach um ein Rundknetverfahren handeln, wobei die nachfolgende Beschreibung auch insoweit als beispielhaft zu verstehen ist. Aufgabe des zu projektierenden Fertigungsprozesses ist die Erzeugung von Hohlwellen mit der im Falle der Hohlwelle 1 gemäß Figur 1 realisierten Ausprägung der Werkstückgeometrie (Beschaffenheitsmerkmal).

An der Hohlwelle 1 folgen in axialer Richtung aufeinander: ein erster zylindrischer Endabschnitt 2, ein erster konischer Übergangsabschnitt 3, ein erster zylindrischer Zwischenabschnitt 4, ein zweiter konischer Übergangsabschnitt 5, ein zweiter zylindrischer Zwischenabschnitt 6, ein dritter konischer Übergangsabschnitt 7, ein dritter zylindrischer Zwischenabschnitt 8, ein vierter konischer Übergangsabschnitt 9, ein vierter zylindrischer Zwischenabschnitt 10, ein fünfter konischer Übergangsabschnitt 11 sowie ein zweiter zylindrischer Endabschnitt 12 (letzterer mit einer Innenverzahnung).

Der Fertigungsprozess ist mit Hilfe eines in Figur 3 skizzierten Computersystems 13 anhand der technischen Werkstückzeichnung gemäß Figur 1 zu entwickeln. Zu diesem Zweck wird anhand der technischen Zeichnung zunächst die gesamte Werkstückgeometrie der Hohlwelle 1 mittels einer Erfassungseinheit 14 des Computersystems 13 erfasst. Dabei wird die technische Zeichnung in Tabellenform formal abgebildet. Dies geschieht, indem die charakteristischen Punkte der Werkstückgeometrie, nämlich die Punkte A bis L gemäß Figur 2 rechnergestützt durch ihre Koordinaten in einem kartesischen Koordinatensystem mit einer x-Achse und einer z-Achse definiert werden. Die z-Achse verläuft parallel zur Symmetrieachse der rotationssymmetrischen Hohlwelle 1. Die Punkte A und L markieren den Anfang und das Ende der Werkstückgeometrie. An den Punkten B bis K tritt jeweils ein Koordinatensprung bei der x-Koordinate auf.

Anhand der die Werkstückgeometrie beschreibenden Tabelle wird in der Erfassungseinheit 14 des Computersystems 13 die Werkstückgeometrie der Hohlwelle 1 in Werkstückteilgeometrien zerlegt, wobei jede der Werkstückteilgeometrien durch zwei einander benachbarte Punkte der Punkte A bis L gemäß Figur 2 begrenzt wird.

Jede der Werkzeugteilgeometrien der zu fertigenden Hohlwelle 1 muss eine bestimmte Ausprägung besitzen, eine sogenannte Soll-Ausprägung. Die Soll-Ausprägung einer Werkzeugteilgeometrie wird rechnergestützt beschrieben, zum einen durch die anlässlich der Erfassung der gesamten Werkstückgeometrie gewonnenen Koordinaten der die Werkstückteilgeometrie begrenzenden Punkte und die daraus abgeleiteten Abmessungen der Werkstückteilgeometrie und zum andern durch generelle Prämissen wie etwa die Rotationssymmetrie und die Wandstärke der Werkstückteilgeometrie.

Ist eine Beschreibung der Soll-Ausprägung einer Werkstückteilgeometrie erstellt, so wird mittels einer Vergleichseinheit 15 des Computersystems 13 ein Vergleich vorgenommen zwischen der Soll-Ausprägung der Werkstückteilgeometrie der zu fertigenden Hohlwelle 1 und in entsprechender Weise beschriebenen Ausprägungen von Werkstückteilgeometrien von Vorläufer-Werkstücken, die im Rahmen bereits projektierter und/oder durchgeführter Fertigungsprozesse realisiert worden sind. Die Ausprägungen von Werkstückteilgeometrien von Vorläufer-Werkstücken sind in einem ersten Datenspeicher 16 des Computersystems 13 in Form einer Ausprägungsdatenbank hinterlegt. Auf den ersten Datenspeicher 16 greift die Vergleichseinheit 15 des Computersystems 13 zu.

Den in dem ersten Datenspeicher 16 hinterlegten Ausprägungen von Werkstückteilgeometrien von Vorläufer-Werkstücken sind definierte Fertigungsparameter einer Parameterdatenbank zugeordnet, die in einem zweiten Datenspeicher 17 des Computersystems 13 enthalten ist. Die Definition der Fertigungsparameter bewirkte im Rahmen der früheren Fertigungsverfahren, dass an den Vorläufer-Werkstücken die betreffenden Ausprägungen der Werkstückteilgeometrien erzeugt wurden.

Wesentliche Fertigungsparameter sind die Prozessart (zum Beispiel Rundkneten), der Typ der Maschine, auf welcher der Fertigungsprozess durchgeführt wird, die Art und die Beschaffenheit des Fertigungswerkzeugs (zum Beispiel Rundknetwerkzeug in Kombination mit oder ohne einen Innendorn) und/oder die Beträge der im Laufe des Fertigungsverfahrens aufgebrachten Prozesskräfte.

Wird bei dem mittels der Vergleichseinheit 15 durchgeführten Vergleich eine relevante Ausprägung einer Werkstückteilgeometrie eines Vorläufer-Werkstücks festgestellt, die mit der Soll-Ausprägung der Werkstückteilgeometrie der zu fertigenden Hohlwelle 1 identisch übereinstimmt, so wird die Definition der Fertigungsparameter des früheren Fertigungsprozesses für den zu projektierenden Fertigungsprozess unverändert übernommen. Eine Auswerteeinheit 18 des Computersystems 13 definiert die Fertigungsparameter des künftigen Fertigungsprozesses entsprechend.

Wird bei dem mittels der Vergleichseinheit 15 durchgeführten Vergleich eine relevante Ausprägung einer Werkstückteilgeometrie eines Vorläufer-Werkstücks festgestellt, die mit der Soll-Ausprägung der Werkstückteilgeometrie der zu fertigenden Hohlwelle 1 zwar nicht identisch übereinstimmt, dieser aber in dem Sinne ähnlich ist, dass die Definition der Fertigungsparameter des zu projektierenden Fertigungsprozesses hergeleitet werden kann durch eine Modifikation derjenigen Definition der Fertigungsparameter, welche im Rahmen des früheren Fertigungsprozesses zu einer der Soll-Ausprägung ähnlichen Ausprägung der Werkstückteilgeometrie eines Vorläufer-Werkstücks geführt hat, so wird zunächst geprüft, wie sich der Durchmesser eines zur Fertigung der Werkstückteilgeometrie des Vorläufer-Werkstücks bearbeiteten Werkstückrohlings zu dem Durchmesser der mit der Soll-Ausprägung zu fertigenden Werkstückteilgeometrie verhält. Auch die Durchmesserinformation zu dem Vorläufer-Werkstück ist in dem Computersystem 13 hinterlegt.

Der genannte Durchmesservergleich ist spezifisch für Fälle der vorliegenden Art, in denen es sich bei dem zu projektierenden Fertigungsprozess um ein Verfahren handelt, im Rahmen dessen ein Aufweiten von Werkstückquerschnitten prozessbedingt nicht möglich ist. Für die Sollausprägung der betrachteten Werkstückteilgeometrie der Hohlwelle 1 kann folglich nur eine Ausprägung der Werkstückteilgeometrie von Vorläufer-Werkstücken relevant sein, die ausgehend von einem Rohlingsdurchmesser erzeugt wurde, der gleichgroß oder größer ist als der Durchmesser der mit der Soll-Ausprägung zu fertigenden Werkstückteilgeometrie.

Sofern eine in diesem Sinne relevante Ausprägung einer Werkstückteilgeometrie eines Vorläufer-Werkstücks festgestellt wird, definiert die Auswerteeinheit 18 des Computersystems 13 anhand der dieser Ausprägung zugeordneten Definition der Fertigungsparameter des früheren Fertigungsprozesses die Fertigungsparameter des künftigen Fertigungsprozesses.

Wird bei dem mittels der Vergleichseinheit 15 durchgeführten Vergleich eine Mehrzahl von relevanten Ausprägungen einer Werkstückteilgeometrie eines Vorläufer-Werkstücks festgestellt, welche der Sollausprägung der Werkstückteilgeometrie der zu fertigenden Hohlwelle 1 ähnlich sind, so wird unter dieser Mehrzahl von Ausprägungen der Werkstückteilgeometrie unter Anwendung eines Auswahlkriteriums eine Ausprägung als bevorzugte relevante Ausprägung der Werkstückteilgeometrie ausgewählt. Als Auswahlkriterium kommt insbesondere der Grad der Ähnlichkeit zwischen der bekannten Ausprägung der Werkstückteilgeometrie und der Soll-Ausprägung der Werkstückteilgeometrie in Frage. Anhand der Definition der Fertigungsparameter, welche der bevorzugten relevanten Ausprägung der Werkstückteilgeometrie von Vorläufer-Werkstücken zugeordnet sind, definiert die Auswerteeinheit 18 des Computersystems 13 die Fertigungsparameter des künftigen Fertigungsprozesses.

In dem letztgenannten Fall ist es auch denkbar, dass zur Ermittlung der bevorzugten relevanten Ausprägung der Werkstückteilgeometrie von Vorläufer-Werkstücken mehrere Auswahlkriterien, die unterschiedlich gewichtet sein können, herangezogen werden.

Auf die beschriebene Art und Weise werden die Fertigungsparameter zur Realisierung der Soll-Ausprägung sämtlicher Werkstückteilgeometrien der zu fertigenden Hohlwelle 1 definiert. Anschließend werden die den Werkstückteilgeometrien zugeordneten Definitionen der Fertigungsparameter miteinander zur umfassenden Definition der Fertigungsparameter kombiniert, aufgrund derer im Rahmen des zu projektierenden Fertigungsprozesses die Hohlwelle 1 mit der Soll-Ausprägung der gesamten Werkstückgeometrie erzeugt wird.

## Patentansprüche

1. Mittels eines Computersystems (13) durchgeführtes Verfahren zur Projektierung eines Fertigungsprozesses, im Rahmen dessen ein Werkstück (1) aufgrund eines geeignet definierten Fertigungsparameters mit einer Soll-Ausprägung eines Beschaffenheitsmerkmals des Werkstücks (1) gefertigt wird, **gekennzeichnet durch folgende Verfahrensschritte:**
• die Soll-Ausprägung des Beschaffenheitsmerkmals des zu fertigenden Werkstücks (1) wird erfasst,
• die erfasste Soll-Ausprägung des Beschaffenheitsmerkmals wird mit Ausprägungen des Beschaffenheitsmerkmals von Vorläufer-Werkstücken verglichen, wobei die Vorläufer-Werkstücke im Rahmen früherer Fertigungsprozesse mit der jeweiligen Ausprägung des Beschaffenheitsmerkmals gefertigt worden sind und die Ausprägungen des Beschaffenheitsmerkmals der Vorläufer-Werkstücke in einer Ausprägungsdatenbank des Computersystems (13) hinterlegt sind und wobei den in der Ausprägungsdatenbank hinterlegten Ausprägungen des Beschaffenheitsmerkmals der Vorläufer-Werkstücke jeweils ein in einer Parameterdatenbank des Computersystems (13) hinterlegter und zur Realisierung der betreffenden Ausprägung des Beschaffenheitsmerkmals eines Vorläufer-Werkstücks geeignet definierter Fertigungsparameter zugeordnet ist,
• bei der Feststellung einer für die Soll-Ausprägung des Beschaffenheitsmerkmals relevanten Ausprägung des Beschaffenheitsmerkmals eines Vorläufer-Werkstücks, welche mit der Soll-Ausprägung des Beschaffenheitsmerkmals identisch ist oder aus welcher die Soll-Ausprägung des Beschaffenheitsmerkmals ableitbar ist, wird anhand der Definition des Fertigungsparameters, welcher der relevanten Ausprägung des Beschaffenheitsmerkmals des Vorläufer-Werkstücks zugeordnet ist, dieser Fertigungsparameter für den Fertigungsprozess zur Fertigung des Werkstücks (1) mit der Soll-Ausprägung des Beschaffenheitsmerkmals definiert.

2. Verfahren nach Anspruch 1, **dadurch gekennzeichnet, dass** bei der Feststellung mehrerer relevanter Ausprägungen des Beschaffenheitsmerkmals eines Vorläufer-Werkstücks eine der relevanten Ausprägungen nach einem Auswahlkriterium als bevorzugte relevante Ausprägung ausgewählt wird und dass anhand der Definition des Fertigungsparameters, welcher der bevorzugten relevanten Ausprägung des Beschaffenheitsmerkmals des Vorläufer-Werkstücks zugeordnet ist, dieser Fertigungsparameter für den Fertigungsprozess zur Fertigung des Werkstücks (1) mit der Soll-Ausprägung des Beschaffenheitsmerkmals definiert wird.

3. Verfahren nach Anspruch 2, **dadurch gekennzeichnet, dass** als Auswahlkriterium bei der Auswahl einer der relevanten Ausprägungen des Beschaffenheitsmerkmals eines Vorläufer-Werkstücks als bevorzugte relevante Ausprägung herangezogen wird:
• der Grad einer Ähnlichkeit zwischen der relevanten Ausprägung des Beschaffenheitsmerkmals und der Soll-Ausprägung des Beschaffenheitsmerkmals und/oder
• ein mit der relevanten Ausprägung des Beschaffenheitsmerkmals verbundener Verschleiß an einem Werkzeug, mittels dessen das Vorläufer-Werkstück mit der relevanten Ausprägung gefertigt worden ist und/oder
• der Betrag einer mit der relevanten Ausprägung des Beschaffenheitsmerkmals verbundenen Bearbeitungskraft, welche bei der Fertigung des Vorläufer-Werkstücks zur Erzeugung der relevanten Ausprägung des Beschaffenheitsmerkmals aufgebracht worden ist und/oder
• eine mit der relevanten Ausprägung des Beschaffenheitsmerkmals verbundene Prozessdauer zur Fertigung des Vorläufer-Werkstücks mit der relevanten Ausprägung des Beschaffenheitsmerkmals und/oder
• ein mit der relevanten Ausprägung des Beschaffenheitsmerkmals verbundener Bedarf an Fertigungseinrichtungen zur Fertigung des Vorläufer-Werkstücks mit der relevanten Ausprägung des Beschaffenheitsmerkmals und/oder
• ein Werkstoff, aus welchem das Vorläufer-Werkstück mit der relevanten Ausprägung des Beschaffenheitsmerkmals gefertigt worden ist.

4. Verfahren nach Anspruch 2 oder Anspruch 3, **dadurch gekennzeichnet, dass** bei der Auswahl einer der relevanten Ausprägungen des Beschaffenheitsmerkmals eines Vorläufer-Werkstücks als bevorzugte relevante Ausprägung mehrere Auswahlkriterien herangezogen werden.

5. Verfahren nach Anspruch 4, **dadurch gekennzeichnet, dass** die Auswahlkriterien unterschiedlich gewichtet werden.

6. Verfahren nach einem der vorhergehenden Ansprüche, **dadurch gekennzeichnet, dass** im Rahmen des vorzubereitenden Fertigungsprozesses ein Werkstück (1) aufgrund eines geeignet definierten Fertigungsparameters mit einer Soll-Ausprägung der als Beschaffenheitsmerkmal vorgesehenen Werkstückgeometrie gefertigt wird.

7. Verfahren nach Anspruch 6, **gekennzeichnet durch** folgende Verfahrensschritte:
• die Soll-Ausprägung der Werkstückgeometrie des zu fertigenden Werkstücks (1) wird erfasst, indem die Sollausprägung von die Werkstückgeometrie ausbildenden Werkstückteilgeometrien (2, 3, 4, 5, 6, 7, 8, 9, 10, 11, 12) erfasst wird,
• die erfasste Sollausprägung einer Werkstückteilgeometrie (2, 3, 4, 5, 6, 7, 8, 9, 10, 11, 12) wird mit in der Ausprägungsdatenbank des Computersystems (13) hinterlegten Ausprägungen der Werkstückteilgeometrie von Vorläufer-Werkstücken verglichen, wobei den in der Ausprägungsdatenbank des Computersystems (13) hinterlegten Ausprägungen der Werkstückteilgeometrie (2, 3, 4, 5, 6, 7, 8, 9, 10, 11, 12) jeweils ein in der Parameterdatenbank des Computersystems (13) hinterlegter und zur Realisierung der betreffenden Ausprägung der Werkstückteilgeometrie eines Vorläufer-Werkstücks geeignet definierter Fertigungsparameter zugeordnet ist,
• bei der Feststellung einer für die Soll-Ausprägung der Werkstückteilgeometrie relevanten Ausprägung der Werkstückteilgeometrie eines Vorläufer-Werkstücks wird anhand der Definition des Fertigungsparameters, welcher der relevanten Ausprägung der Werkstückteilgeometrie des Vorläufer-Werkstücks zugeordnet ist, dieser Fertigungsparameter für den Fertigungsprozess zur Fertigung des Werkstücks (1) mit der Soll-Ausprägung der Werkstückteilgeometrie (2, 3, 4, 5, 6, 7, 8, 9, 10, 11, 12) definiert.

8. Verfahren nach Anspruch 7, wobei die Soll-Ausprägung zweier einander benachbarter und voneinander verschiedener Werkstückteilgeometrien (2, 3, 4, 5, 6, 7, 8, 9, 10, 11, 12) erfasst wird, **dadurch gekennzeichnet,**
• **dass** zusätzlich zu der Soll-Ausprägung der beiden Werkstückteilgeometrien (2, 3, 4, 5, 6, 7, 8, 9, 10, 11, 12) der geometrische Soll-Zusammenhang zwischen den beiden Werkstückteilgeometrien (2, 3, 4, 5, 6, 7, 8, 9, 10, 11, 12) erfasst wird,
• **dass** zusätzlich zu dem Vergleich der erfassten Sollausprägung der beiden Werkstückteilgeometrien (2, 3, 4, 5, 6, 7, 8, 9, 10, 11, 12) mit den in der Ausprägungsdatenbank hinterlegten Ausprägungen der Werkstückteilgeometrie von Vorläufer-Werkstücken der erfasste geometrische Soll-Zusammenhang zwischen den beiden Werkstückteilgeometrien(2, 3, 4, 5, 6, 7, 8, 9, 10, 11, 12) verglichen wird mit in einer Zusammenhangdatenbank des Computersystems (13) hinterlegten geometrischen Zusammenhängen zwischen einander benachbarten Werkstückteilgeometrien eines Vorläufer-Werkstücks, wobei den in der Zusammenhangdatenbank des Computersystems (13) hinterlegten geometrischen Zusammenhängen zwischen einander benachbarten Werkstückteilgeometrien jeweils ein in der Parameterdatenbank des Computersystems (13) hinterlegter und zur Realisierung des geometrischen Zusammenhangs geeignet definierter Fertigungsparameter zugeordnet ist und
• **dass** bei Feststellung eines für den geometrischen Soll-Zusammenhang relevanten geometrischen Zusammenhangs zwischen einander benachbarten Werkstückteilgeometrien eines Vorläufer-Werkstücks anhand der Definition des Fertigungsparameters, welcher dem relevanten geometrischen Zusammenhang zugeordnet ist, dieser Fertigungsparameter für den Fertigungsprozess zur Fertigung des Werkstücks (1) mit dem geometrischen Soll-Zusammenhang der einander benachbarten Werkstückteilgeometrien (2, 3, 4, 5, 6, 7, 8, 9, 10, 11, 12) definiert wird.

9. Verfahren nach Anspruch 7 und Anspruch 2, **dadurch gekennzeichnet, dass** bei der Feststellung mehrerer relevanter Ausprägungen der Werkstückteilgeometrie eines Vorläufer-Werkstücks eine der relevanten Ausprägungen nach einem Auswahlkriterium als bevorzugte relevante Ausprägung ausgewählt wird und dass anhand der Definition des Fertigungsparameters, welcher der bevorzugten relevanten Ausprägung der Werkstückteilgeometrie des Vorläufer-Werkstücks zugeordnet ist, dieser Fertigungsparameter für den Fertigungsprozess zur Fertigung des Werkstücks (1) mit der Soll-Ausprägung der Werkstückteilgeometrie (2, 3, 4, 5, 6, 7, 8, 9, 10, 11, 12) definiert wird.

10. Verfahren nach Anspruch 9, wobei die erfasste Sollausprägung mehrerer Werkstückteilgeometrien (2, 3, 4, 5, 6, 7, 8, 9, 10, 11, 12) mit in der Ausprägungsdatenbank des Computersystems (13) hinterlegten Ausprägungen der Werkstückteilgeometrie von Vorläufer-Werkstücken verglichen wird und wobei für jede der Werkstückteilgeometrien (2, 3, 4, 5, 6, 7, 8, 9, 10, 11, 12) bei der Feststellung mehrerer relevanter Ausprägungen der Werkstückteilgeometrie eines Vorläufer-Werkstücks eine der relevanten Ausprägungen nach einem Auswahlkriterium als bevorzugte relevante Ausprägung ausgewählt wird, **dadurch gekennzeichnet, dass** bei der Auswahl der bevorzugten relevanten Ausprägung für wenigstens zwei Werkstückteilgeometrien das gleiche Auswahlkriterium herangezogen wird.

11. Verfahren nach einem der vorhergehenden Ansprüche, **dadurch gekennzeichnet, dass** als Vorläufer-Werkstücke Fertigteile oder Zwischenprodukte vorgesehen sind.

12. Computerprogramm mit Programmcodemitteln zum Ausführen sämtlicher Schritte des Verfahrens nach einem der vorhergehenden Ansprüche, wenn das Computerprogramm auf einem Computersystem (13) abläuft.

13. Computerlesbares Speichermedium, auf welchem das Computerprogramm nach Anspruch 12 gespeichert ist.

14. Computersystem zur Durchführung des Verfahrens nach einem der Ansprüche 1 bis 11, **gekennzeichnet durch**
• eine Erfassungseinheit (14), mittels derer die Soll-Ausprägung des Beschaffenheitsmerkmals des zu fertigenden Werkstücks (1) erfassbar ist,
• eine Vergleichseinheit (15), mittels derer die erfasste Soll-Ausprägung des Beschaffenheitsmerkmals mit Ausprägungen des Beschaffenheitsmerkmals von Vorläufer-Werkstücken vergleichbar ist, wobei die Vorläufer-Werkstücke im Rahmen früherer Fertigungsprozesse mit der jeweiligen Ausprägung des Beschaffenheitsmerkmals gefertigt worden sind,
• mit einem Datenspeicher (16), in welchem die Ausprägungen des Beschaffenheitsmerkmals der Vorläufer-Werkstücke in einer Ausprägungsdatenbank hinterlegt sind,
• mit einem Datenspeicher (17), in welchem in einer Parameterdatenbank ein zur Realisierung der Ausprägung des Beschaffenheitsmerkmals der Vorläufer-Werkstücke geeignet definierter Fertigungsparameter hinterlegt ist, der einer in der Ausprägungsdatenbank hinterlegten Ausprägung des Beschaffenheitsmerkmals der Vorläufer-Werkstücke zugeordnet ist sowie
• mit einer Auswerteeinheit (18), mittels derer bei der Feststellung einer für die Soll-Ausprägung des Beschaffenheitsmerkmals relevanten Ausprägung des Beschaffenheitsmerkmals eines Vorläufer-Werkstücks, welche mit der Soll-Ausprägung des Beschaffenheitsmerkmals identisch ist oder aus welcher die Soll-Ausprägung des Beschaffenheitsmerkmals ableitbar ist, anhand der Definition des Fertigungsparameters, welcher der relevanten Ausprägung des Beschaffenheitsmerkmals des Vorläufer-Werkstücks zugeordnet ist, dieser Fertigungsparameter für den Fertigungsprozess zur Fertigung des Werkstücks (1) mit der Soll-Ausprägung des Beschaffenheitsmerkmals definierbar ist.
